# EUROPEAN PATENT SPECIFICATION

(11) **EP 2 521 343 B1**
(45) Date of publication and mention of the grant of the patent: **03.07.2019**
(21) Application number: 11165030.5
(22) Date of filing: 06.05.2011
(51) Int. Cl.: H04M 3/51, G06Q 10/00, G06Q 30/00

(54) **RATING A COMMUNICATION PARTY**
BEURTEILUNG EINES KOMMUNIKATIONSTEILNEHMERS
ÉVALUATION D'UNE PARTIE DE COMMUNICATION

(43) Date of publication of application: 07.11.2012
(73) Proprietor: Telia Company AB, 106 63 Stockholm (SE)
(72) Inventor: Lehtonen, Rami, 37800, Toijala (FI); Kivirauma, Kimmo, 36100, Kangasala AS (FI)
(74) Representative: Papula Oy

(56) References cited:
- US-A1- 2010 076 816
- US-A1- 2010 166 171

## Description

### FIELD OF THE INVENTION

The invention relates to communications. More specifically, the invention relates to rating a communication party of a communication session.

### BACKGROUND OF THE INVENTION

A communication session such as a telephone conversation may be rated after the session. For example, customer service organizations find it essential to get feedback about their service over the phone. Also, sales people and even consumers would be interested in getting feedback for their latest communication session. Current methods for rating a communication session include SMS-based feedback where the customer service sends a text message to the customer requesting the feedback. From the customer's perspective this is a very time consuming method that requires many steps. In some existing services the caller needs to decide in advance whether he/she wants to give feedback after the phone conversation, but this is many times deemed frustrating by the user. As a result much of the feedback is never sent and the customer service lacks the measurement it may need to improve its operation.

Examples of background art are provided by patent publication documents US 2010/166171 and US 2010/076816.

Accordingly, there is a need to rate a communication party in a simple manner through a user-friendly procedure.

### PURPOSE OF THE INVENTION

The purpose of the invention is to present a new method, a computer program product and an apparatus for providing feedback after a communication session or rating the session. In addition or alternatively to the rating, the user can also give feedback to other service attributes that are discussed during the communication session.

### SUMMARY

The invention discloses a method according to claim 1.

The invention discloses also a computer program product according to claim 6.

The invention discloses also a communication apparatus according to claim 10.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig. 1** is a block diagram illustrating the invention, and
**Fig. 2** is a block diagram illustrating another use case of the invention.

### DETAILED DESCRIPTION OF THE INVENTION

Reference will now be made in detail to the embodiments of the present invention, examples of which are illustrated in the accompanying drawings.

From the user's point of view the operation of the invention is simple: after the call has ended, the first communication party rates the second communication party by pointing a graphical image or presentation of different rating values on the screen of a communication apparatus that the first communication party is using.

The invention is used in a communication system comprising two communication parties. The communication system may comprise a wireless communication system such as GSM, 3G, UMTS, 4G or LTE. At least one communication party may comprise a communication apparatus such as a mobile phone connected to the wireless communication system. The other communication party may be connected to the same network by a mobile phone. The other party may also be part of a larger customer service operation or a call center; therefore, the identification of the second party may be the individual apparatus the other party is using, or the identification may be pointing to a group of apparatuses operating in a similar environment, such as a call center group.

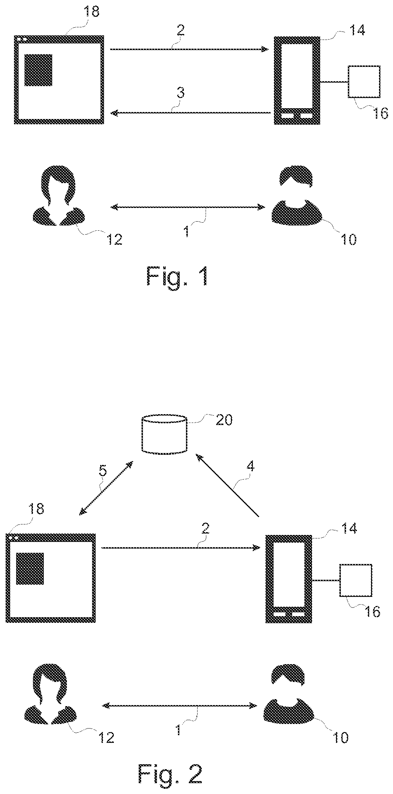

Figure 1 discloses elements of the invention with arrows representing the information flow between the elements. The first communication party 10 communicates with the second communication party 12 using a communication apparatus such as a mobile phone 14. The mobile phone 14 comprises a rating application 16, which is installed into the memory of the mobile phone 14, or it may be integrated as part of the operating system. The rating application 16 can be run in several modes. In one embodiment the rating application is run in the background and will be activated when the other party is asking feedback. The other party may be the second communication party 12 participating to the phone call or it may be a separate party running the CRM system (CRM, Customer Relationship Management), a quality management function or the like. In one embodiment the first communication party 10 starts the rating application 16 manually whenever he/she wants to rate or give feedback for the communication sessions held. In one embodiment the mobile phone 14 is configured to start the rating application 16 after every call or immediately after the call is started. The rating application 16 can be run in the background, be included as a part of some other generic application or be integrated into the phone system; therefore, the rating application may be active during the communication session. The rating application 16 can be part of a CRM system or at least comprise an interface to store the feedback in the CRM system.

The rating information is collected to a rating computer 20, which may process the rating information to different formats. The rating computer 20 may also be a database or simple data storage suitable for collecting the rating information. The rating computer 20 may be part of the CRM system or connected to such a system. In one embodiment the rating computer 20 is configured to be connected to the communication apparatus of the second communication party 12. The rating computer may be a separate application running in the communication apparatus. Either the first communication party 10 or the second communication party 12 may comprise a rating application 16 in the communication apparatus. Either party may also receive a request from the rating computer 20 to rate the communication session. The first communication party 10 may be either the calling party or the called party; it is not relevant for the functionality of the invention which party is starting the communication session or initiating the call.

Arrows in Figure 1 represent a use case where the first communication 10 party rates a second communication party 12 such as a call center, customer support or similar business related entity, and the rating computer is integrated to the second communication party's 12 environment. The first communication party 10 and the second communication party 20 are in a communication session, which may be a phone call or messaging session; arrow 1. The rating application 16 in the communication apparatus, such as a mobile phone 14, is started. The rating application 16 waits for request from the first communication party 10 or the rating computer 20; arrow 2. The rating application 16 keeps track of all phone calls and assigns each one a unique identification code. The second communication party 12 also comprises a rating application 18, keeping track of all communication sessions by the second communication party 12 and assigning unique identifications to each session. The rating application 18 may be part of the CRM system or call center's management system. The rating application 16 installed into the phone 14 of the first communication party 10 sends the unique identification code and the rating information to the second communication party 12; arrow 3. Since the communication involves only the first and the second party, the information does not need to be encrypted.

The unique identification assigned by both parties is used to parse the communication session and the related rating information together in the rating computer 20. In one embodiment the unique identification comprises a MD5 hash number that is based on the calling number A, called number B, and a universal clock timestamp. The rating application 16 may obtain the universal clock timestamp from a network clock server that is using e.g. NTP, Network Time Protocol, e.g. in format yyyy-mm-dd-hh:mm. Therefore, both communication parties 10, 12 are using similar time within a reasonable timing accuracy as the accuracy used is minutes. The unique identification code is calculated from the moment of starting the communication session, for example by answering the phone call. The time may also be obtained from the end of the call or from the time of losing contact to the other party.

Example of the unique identification code:
- A calls B on 2010-01-13 at 18:24.
- unique_id for that call is
   = MD5 ("A,B,2011-01-13-18:24")
   = fd9501fccd70660497175d7521469cb4

When B receives the call, the rating application 16 in B's phone calculates the same unique identification code since MD5 is always calculated with the formula where the elements are known to both parties:
MD5("caller_number,called_number,clocktime")

In the example of Fig. 2 the customer service person A, the second communication party 12, calls the customer B, the first communication party 10, at a specific moment. Both feedback applications notice this and register the same unique identification number (in this case: "fd9501fccd70660497175d7521469cb4") to their local database/memory at the moment when the call is answered.

If the second communication party 12 wants to receive feedback from the first communication party 10, the rating application residing in the second communication party's 12 communication apparatus sends a Feedback_request to the first communication party 10 using known mechanisms such as specially formatted SMS which the feedback application listens to, or e.g. Apple's Push Notification Service; arrow 2.

The Feedback_request contains the following parameters: unique_id, feedback_type, options. Unique_id is the unique identification code obtained by both communication parties, feedback_type describes the type of requested feedback or rating (e.g. rate 1...5, thumbs up/down, text_string, voice_message, picture, video_message, etc.), and options further define e.g. the destination where the feedback is sent.

The rating application 16 in the phone of the first communication party 10 is notified about the Feedback_request, and shows the user the rating screen based on the requested parameters. Examples of graphical illustrations of rating objects presented to the first communication party are presented in Figures 3 and 4. The rating object is a graphical, interactive user interface object with which the user interacts in order to rate the second communication party. The user interaction may be effected by a touch screen or a graphical element that the user may move along the screen by arrow buttons, such as a cursor. The communication apparatus 14 is configured to represent the user interaction to the rating application 16 when the rating object is selected and a corresponding rating value from a user interface is transformed as a value to the rating application 16. Examples of the rating object are: images of thumb, up or down; stars or similar objects that may be selected as desired numbers by a gesture applied by the user; a predefined path, a line or similar comprising a graphical element, which the user may drag into a desired position; a two-dimensional area having two axis, where the user may express more complicated rating values; and other graphical illustrations that may be transformed into a value expressed by the user.

The first communication party 10 gives the feedback e.g. by pressing the "thumbs up" button on the screen. According to one embodiment of the present invention, the first communication party 10 records also a voice message, a media file to be included into the rating information. The rating application 16 sends the rating information to the rating computer 20, where the rating computer may be implemented to various locations. Alternatives include the second communication party as in Fig. 1, arrow 3, or a destination defined in the options parameter, for example a CRM system.

In one embodiment according to Figure 2, an alternative procedure replaces the previous arrow 3. The rating application 16 sends the rating information to a rating computer 20. The rating application encrypts the feedback_content using a strong shared key encryption method, and uses (A, B, universal_clock_timestamp) as key encryption parameters. The universal_clock_timestamp is the same time as what was used to calculate the unique identification code, being either the start time or the end time of the call. After encrypting the feedback_content, the rating application 16 registers to the rating computer 20 with parameters (unique identification code, encrypted_feedback), arrow 4. The benefit of using only unique identification code and encrypted_feedback is that it is very difficult for any third party to know how to decrypt the encrypted_feedback, yet both original communication parties are able to do that with the key (A,B,universal_clock_timestamp). The other benefit is that no calling party information is stored in the rating computer 20 and there is no way for any third party to discover the communication parties involved.

The rating application of the second communication party 12 checks the unique identification codes, downloads the encrypted_feedback from the rating computer 20 and decrypts it using the shared secret method as described above; arrow 5.

In another use case both communication parties are having a private communication session such as a regular phone call. The second party is not requesting for rating or feedback, but the present invention is used to express e.g. positive feelings right after the call. In this embodiment both the first and the second communication party comprise communication apparatuses such as mobile phones that comprise the rating application 16. The rating application 16 is run in a background mode in both parties' phones. The rating application 16 keeps track of phone calls and gives each of them identical unique identification codes.

As the first communication party 12 calls to the second communication party, rating applications 16 register the same unique identification code as described in the context of the previous use case. After the call, the rating application 16 in either party's phone requests the user to rate or give feedback to the other party.

If the first communication party 10 wants to give feedback to the second communication party, the user selects the icon or a similar graphical element on the rating application screen 16. The user may also record a short audio or video clip as a part of the feedback.

The rating application 16 can send the feedback to the second communication party 12 as a MMS message, or it can encrypt the feedback and upload the encrypted_feedback together with the unique identification code to the rating computer 20 and notify the second communication party 12 using known methods. The rating application of the second communication party can download the encrypted_feedback from the rating computer 20.

The rating mechanism according to the present invention may be used for building instant feedback services or to deliver a calling party feeling directly after a call. Such services are typically active for about 10 seconds after the call has ended and consist typically of only a few different rating options. As a result the user can rate the communication session, communication party, company representing the other communication party in a straightforward manner, if the user has an immediate feeling on the other party. The invention improves the rating accuracy by instant functionality and the quantity of the received feedback by ease of use.

Embodiments of the present invention may be implemented in software, hardware, application logic or a combination of software, hardware and application logic. In an example embodiment, the application logic, software or instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer. A computer-readable medium may comprise a computer-readable storage medium that may be any media or means that can contain or store the instructions for use by or in connection with an instruction execution system, apparatus, or device, such as a computer. The exemplary embodiments can store information relating to various processes described herein. This information can be stored in one or more memories, such as a hard disk, optical disk, magneto-optical disk, RAM, and the like. One or more databases can store the information used to implement the exemplary embodiments of the present inventions. The databases can be organized using data structures (e.g., records, tables, arrays, fields, graphs, trees, lists, and the like) included in one or more memories or storage devices listed herein. The processes described with respect to the exemplary embodiments can include appropriate data structures for storing data collected and/or generated by the processes of the devices and subsystems of the exemplary embodiments in one or more databases.

All or a portion of the exemplary embodiments can be conveniently implemented using one or more general purpose processors, microprocessors, digital signal processors, micro-controllers, and the like, programmed according to the teachings of the exemplary embodiments of the present inventions, as will be appreciated by those skilled in the computer and/or software art(s). Appropriate software can be readily prepared by programmers of ordinary skill based on the teachings of the exemplary embodiments, as will be appreciated by those skilled in the software art. In addition, the exemplary embodiments can be implemented by the preparation of application-specific integrated circuits or by interconnecting an appropriate network of conventional component circuits, as will be appreciated by those skilled in the electrical art(s). Thus, the exemplary embodiments are not limited to any specific combination of hardware and/or software.

If desired, the different functions discussed herein may be performed in a different order and/or concurrently with each other.

Furthermore, if desired, one or more of the above-described functions may be optional or may be combined.

It is obvious to a person skilled in the art that with the advancement of technology, the basic idea of the invention may be implemented in various ways. The invention and its embodiments are thus not limited to the examples described above; the scope of the invention is defined by the appended claims.

## Claims

1. A method for rating a communication session comprising a second communication party (12), wherein a first communication party (10) comprises a communication apparatus (14), the method comprising:
storing in said communication apparatus a start time of the communication session and the identification of the second communication party (12);
forming in said communication apparatus a unique identification code of the communication session;
after the communication session has ended selecting a rating object and a corresponding rating value from a user interface of said communication apparatus, wherein the rating object is a graphical, interactive user interface object with which the user interacts in order to rate the communication session; and
sending the rating information from said communication apparatus to a rating computer (20, 18), said rating information comprising the identification code and the rating value;
wherein said identification code is formed from the start or end time of the communication session, the identification of the first communication party (10) and the identification of the second communication party (12) .

2. The method according to claim 1, **characterized by** hashing the identification code.

3. The method according to claim 1, **characterized by** encrypting the rating value by using the identification code as a shared secret key.

4. The method according to claim 1, **characterized by** the rating information comprising a media file.

5. The method according to claim 1, **characterized in that** the apparatus (14) is a wireless user equipment.

6. A computer program product for rating a communication session comprising a second communication party (12), wherein a first communication party (10) comprises a communication apparatus (14) comprising a computer-readable medium bearing computer program code embodied therein for use with a computer, the computer program code comprising:
storing in said communication apparatus a start time of the communication session and the identification of the second communication party (12);
forming in said communication apparatus a unique identification code of the communication session;
after the communication session has ended, selecting a rating object and a corresponding rating value from a user interface of said communication apparatus, wherein the rating object is a graphical, interactive user interface object with which the user interacts in order to rate the communication session; and
sending the rating information from said communication apparatus to a rating computer (20, 18), said rating information comprising the identification code and the rating value;
wherein said identification code is formed from the start or end time of the communication session, the identification of the first communication party (10) and the identification of the second communication party (12) .

7. The computer program product according to claim 6, **characterized by** hashing the identification code.

8. The computer program product according to claim 6, **characterized by** encrypting the rating value by using the identification code as a shared secret key.

9. The computer program product according to claim 6, **characterized by** the rating information comprising a media file.

10. A communication apparatus for a first communication party (10) configured to rate a communication session comprising a second communication party (12), comprising:
means for storing a start time of the communication session and the identification of the second communication party (12);
means for forming a unique identification code of the communication session;
means for selecting, after the communication session has ended, a rating object and a corresponding rating value from a user interface, wherein the rating object is a graphical, interactive user interface object with which the user interacts in order to rate the communication session;
means for sending the rating information to a rating computer (20, 18), said rating information comprising the identification code and the rating value, and
means for forming the identification code from the start or end time of the communication session, the identification of the first communication party (10) and the identification of the second communication party (12) .

11. The communication apparatus according to claim 10, **characterized by** comprising means for hashing the identification code.

12. The communication apparatus according to claim 10, **characterized by** comprising means for encrypting the rating value by using the identification code as a shared secret key.

13. The communication apparatus according to claim 10, **characterized by** comprising means for creating a media file and connecting said media file to the rating information.

14. The communication apparatus according to claim 10, **characterized in that** the apparatus is a wireless user equipment.

## Patentansprüche

1. Verfahren zum Bewerten einer Kommunikationssitzung, die einen zweiten Kommunikationsteilnehmer (12) umfasst, wobei ein erster Kommunikationsteilnehmer (10) ein Kommunikationsgerät (14) umfasst, wobei das Verfahren umfasst:
Speichern einer Startzeit der Kommunikationssitzung und die Identifikation des zweiten Kommunikationsteilnehmers (12) in dem Kommunikationsgerät;
Bilden eines einmaligen Identifikationscodes der Kommunikationssitzung in dem Kommunikationsgerät;
nachdem die Kommunikationssitzung beendet ist, Wählen eines Bewertungsobjekts und eines entsprechenden Bewertungswerts von einer Benutzerschnittstelle des Kommunikationsgeräts, wobei das Bewertungsobjekt ein grafisches, interaktives Benutzerschnittstellenobjekt ist, mit dem der Benutzer interagiert, um die Kommunikationssitzung zu bewerten; und
Senden der Bewertungsinformationen von dem Kommunikationsgerät zu einem Bewertungscomputer (20, 18), wobei die Bewertungsinformationen den Identifikationscode und den Bewertungswert umfassen;
wobei der Identifikationscode aus der Start- oder Endzeit der Kommunikationssitzung, der Identifikation des ersten Kommunikationsteilnehmers (10), und der Identifikation des zweiten Kommunikationsteilnehmers (12) gebildet wird.

2. Verfahren nach Anspruch 1, **gekennzeichnet durch** Hashen des Identifikationscodes.

3. Verfahren nach Anspruch 1, **gekennzeichnet durch** Verschlüsseln des Bewertungswerts durch Verwenden des Informationscodes als einen gemeinsamen geheimen Schlüssel.

4. Verfahren nach Anspruch 1, **dadurch gekennzeichnet, dass** die Bewertungsinformationen eine Mediendatei umfassen.

5. Verfahren nach Anspruch 1, **dadurch gekennzeichnet, dass** das Gerät (14) eine kabellose Benutzerausrüstung ist.

6. Computerprogrammprodukt zum Bewerten einer Kommunikationssitzung, die einen zweiten Kommunikationsteilnehmer (12) umfasst, wobei ein erster Kommunikationsteilnehmer (10) ein Kommunikationsgerät (14) umfasst, das ein computerlesbares Medium mit darin enthaltenem Computerprogrammcode zum Verwenden mit einem Computer umfasst, wobei der Computerprogrammcode umfasst:
Speichern einer Startzeit der Kommunikationssitzung und die Identifikation des zweiten Kommunikationsteilnehmers (12) in dem Kommunikationsgerät;
Bilden eines einmaligen Identifikationscodes der Kommunikationssitzung in dem Kommunikationsgerät;
nachdem die Kommunikationssitzung beendet ist, Wählen eines Bewertungsobjekts und eines entsprechenden Bewertungswerts von einer Benutzerschnittstelle des Kommunikationsgeräts, wobei das Bewertungsobjekt ein grafisches, interaktives Benutzerschnittstellenobjekt ist, mit dem der Benutzer interagiert, um die Kommunikationssitzung zu bewerten; und
Senden der Bewertungsinformationen von dem Kommunikationsgerät zu einem Bewertungscomputer (20, 18), wobei die Bewertungsinformationen den Identifikationscode und den Bewertungswert umfassen;
wobei der Identifikationscode aus der Start- oder Endzeit der Kommunikationssitzung, der Identifikation des ersten Kommunikationsteilnehmers (10), und der Identifikation des zweiten Kommunikationsteilnehmers (12) gebildet wird.

7. Computerprogrammprodukt nach Anspruch 6, **gekennzeichnet durch** Hashen des Identifikationscodes.

8. Computerprogrammprodukt nach Anspruch 6, **gekennzeichnet durch** Verschlüsseln des Bewertungswerts durch Verwenden des Informationscodes als einen gemeinsamen geheimen Schlüssel.

9. Computerprogrammprodukt nach Anspruch 6, **dadurch gekennzeichnet, dass** die Bewertungsinformationen eine Mediendatei umfassen.

10. Kommunikationsgerät für einen ersten Kommunikationsteilnehmer (10), das zum Bewerten einer Kommunikationssitzung, die einen zweiten Kommunikationsteilnehmer (12) umfasst, eingerichtet ist, mit:
einem Mittel zum Speichern einer Startzeit der Kommunikationssitzung und der Identifikation des zweiten Kommunikationsteilnehmers (12);
einem Mittel zum Bilden eines einmaligen Identifikationscodes der Kommunikationssitzung;
einem Mittel zum Wählen, nachdem die Kommunikationssitzung beendet ist, eines Bewertungsobjekts und eines entsprechenden Bewertungswerts von einer Benutzerschnittstelle, wobei das Bewertungsobjekt ein grafisches, interaktives Benutzerschnittstellenobjekt ist, mit dem der Benutzer integriert, um die Kommunikationssitzung zu bewerten;
einem Mittel zum Senden der Bewertungsinformationen an einen Bewertungscomputer (20, 18), wobei die Bewertungsinformationen den Identifikationscode und den Bewertungswert umfassen, und
einem Mittel zum Bilden des Identifikationscodes aus der Start- oder Endzeit der Kommunikationssitzung, der Identifikation des ersten Kommunikationsteilnehmers (10), und der Identifikation des zweiten Kommunikationsteilnehmers (12).

11. Kommunikationsgerät nach Anspruch 10, **gekennzeichnet durch** Umfassen eines Mittels zum Hashen des Identifikationscodes.

12. Kommunikationsgerät nach Anspruch 10, **gekennzeichnet durch** Umfassen eines Mittels zum Verschlüsseln des Bewertungswerts durch Verwenden des Identifikationscodes als einen gemeinsamen geheimen Schlüssel.

13. Kommunikationsgerät nach Anspruch 10, **gekennzeichnet durch** Umfassen eines Mittels zum Erzeugen einer Mediendatei und Anschließen der Mediendatei an die Bewertungsinformationen.

14. Kommunikationsgerät nach Anspruch 10, **dadurch gekennzeichnet, dass** das Gerät eine kabellose Benutzerausrüstung ist.

## Revendications

1. Procédé d'évaluation d'une session de communication comprenant une seconde partie de communication (12), dans lequel une première partie de communication (10) comprend un appareil de communication (14), le procédé comprenant :
le stockage dans ledit appareil de communication d'un temps de début de la session de communication et de l'identification de la seconde partie de communication (12) ;
la formation dans ledit appareil de communication d'un code d'identification unique de la session de communication ;
après que la session de communication a pris fin, la sélection d'un objet d'évaluation et d'une valeur d'évaluation correspondante dans une interface utilisateur dudit appareil de communication, dans lequel l'objet d'évaluation est un objet d'interface utilisateur graphique, interactive avec lequel l'utilisateur interagit afin d'évaluer la session de communication ; et
l'envoi des informations d'évaluation dudit appareil de communication à un ordinateur d'évaluation (20, 18), lesdites informations d'évaluation comprenant le code d'identification et la valeur d'évaluation ;
dans lequel ledit code d'identification est formé à partir du temps de début ou de fin de la session de communication, de l'identification de la première partie de communication (10) et de l'identification de la seconde partie de communication (12).

2. Procédé selon la revendication 1, **caractérisé par** le hachage du code d'identification.

3. Procédé selon la revendication 1, **caractérisé par** le cryptage de la valeur d'évaluation en utilisant le code d'identification comme clé secrète partagée.

4. Procédé selon la revendication 1, **caractérisé en ce que** les informations d'évaluation comprennent un fichier multimédia.

5. Procédé selon la revendication 1, **caractérisé en ce que** l'appareil (14) est un équipement d'utilisateur sans fil.

6. Produit de programme informatique pour évaluer une session de communication comprenant une seconde partie de communication (12), dans lequel une première partie de communication (10) comprend un appareil de communication (14) comprenant un support lisible par ordinateur portant un code de programme informatique intégré à l'intérieur destiné à être utilisé avec un ordinateur, le code de programme informatique comprenant :
le stockage dans ledit appareil de communication d'un temps de début de la session de communication et de l'identification de la seconde partie de communication (12) ;
la formation dans ledit appareil de communication d'un code d'identification unique de la session de communication ;
après que la session de communication a pris fin, la sélection d'un objet d'évaluation et d'une valeur d'évaluation correspondante dans une interface utilisateur dudit appareil de communication, dans lequel l'objet d'évaluation est un objet d'interface utilisateur graphique, interactive avec lequel l'utilisateur interagit afin d'évaluer la session de communication ; et
l'envoi des informations d'évaluation dudit appareil de communication à un ordinateur d'évaluation (20, 18), lesdites informations d'évaluation comprenant le code d'identification et la valeur d'évaluation ;
dans lequel ledit code d'identification est formé à partir du temps de début ou de fin de la session de communication, de l'identification de la première partie de communication (10) et de l'identification de la seconde partie de communication (12).

7. Produit de programme informatique selon la revendication 6, **caractérisé par** le hachage du code d'identification.

8. Produit de programme informatique selon la revendication 6, **caractérisé par** le cryptage de la valeur d'évaluation en utilisant le code d'identification comme clé secrète partagée.

9. Produit de programme informatique selon la revendication 6, **caractérisé en ce que** les informations d'évaluation comprennent un fichier multimédia.

10. Appareil de communication pour une première partie de communication (10) configuré pour évaluer une session de communication comprenant une seconde partie de communication (12), comprenant :
des moyens pour stocker un temps de début de la session de communication et l'identification de la seconde partie de communication (12) ;
des moyens pour former un code d'identification unique de la session de communication ;
des moyens pour sélectionner, après que la session de communication a pris fin, un objet d'évaluation et une valeur d'évaluation correspondante dans une interface utilisateur, dans lequel l'objet d'évaluation est un objet d'interface utilisateur graphique, interactive avec lequel l'utilisateur interagit afin d'évaluer la session de communication ;
des moyens pour envoyer les informations d'évaluation à un ordinateur d'évaluation (20, 18), lesdites informations d'évaluation comprenant le code d'identification et la valeur d'évaluation, et
des moyens pour former le code d'identification à partir du temps de début ou de fin de la session de communication, de l'identification de la première partie de communication (10) et de l'identification de la seconde partie de communication (12).

11. Appareil de communication selon la revendication 10, **caractérisé en ce qu'**il comprend des moyens de hachage du code d'identification.

12. Appareil de communication selon la revendication 10, **caractérisé en ce qu'**il comprend des moyens de cryptage de la valeur d'évaluation en utilisant le code d'identification comme clé secrète partagée.

13. Appareil de communication selon la revendication 10, **caractérisé en ce qu'**il comprend des moyens de création d'un fichier multimédia et de liaison dudit fichier multimédia aux informations d'évaluation.

14. Appareil de communication selon la revendication 10, **caractérisé en ce que** l'appareil est un équipement d'utilisateur sans fil.
